# EUROPÄISCHE PATENTSCHRIFT

(11) **EP 0 893 638 B1**
(45) Veröffentlichungstag und Bekanntmachung des Hinweises auf die Patenterteilung: **05.02.2003**
(21) Anmeldenummer: 97112858.2
(22) Anmeldetag: 25.07.1997
(51) Int. Cl.: F16L 3/26, H02G 3/04

(54) **Starres, winkelförmiges Profil für die Verlegung von Leitungen und Rohren**
Rigid, Angular profile for laying tubes and pipes
Profilé angulaire rigide pour poser des tuyaux et des conduites pour l'introduction de conducteurs

(43) Veröffentlichungstag der Anmeldung: 27.01.1999
(73) Patentinhaber: Licatec GmbH Licht- und Kabelführungssysteme, 50226 Frechen (DE)
(72) Erfinder: Cormann, Hans-Günter, 50859 Köln (DE)
(74) Vertreter: Haft, von Puttkamer, Berngruber, Czybulka

(56) Entgegenhaltungen:
- EP-A- 0 526 024
- DE-A- 3 937 371
- DE-U- 29 502 856
- FR-A- 2 383 539
- GB-A- 2 284 715
- US-A- 3 786 171
- US-A- 4 423 284
- US-A- 4 534 147

## Beschreibung

Die Erfindung betrifft ein starres, winkelförmiges Kunststoffprofil gemäß dem Oberbegriff des Anspruchs 1. Ein derartiges Kunststoffprofil für die Verlegung von Leitungen und Rohren ist aus dem Stand der Technik nicht bekannt.

Aus dem Stand der Technik sind aus mehreren Einzelsegmenten bestehende, flache Kunststoffbänder bekannt, die endlos im Extrusionsverfahren hergestellt werden. Solche flache Kunststoffbänder sind beispielsweise aus der WO 80/02476, der DE 87 10 777.5 und dem EP 0 696 097 A1 bekannt. Obwohl diese aus dem Stand der Technik bekannten Kunststoffprofile durchaus brauchbar sind, weisen sie jedoch gravierende Nachteile bei der professionellen Montage auf.

Diese flachen Kunststoffbänder werden bei der Montage entweder als Band am Untergrund befestigt, oder vor der Befestigung zusammengefaltet, d.h. die Seitenwände werden aufgerichtet. Bei beiden Befestigungsmethoden ergeben sich Nachteile bei der Montage. Bei der Befestigung im flachen Zustand paßt sich das elastische Band aufgrund der geringen Biegesteifigkeit dem Untergrund an und wird bei unebenen Untergründen wellig. Beim nachträglichen Aufrichten der Seitenwände kommt es zu einer ungewollten Deformierung des Kabelkanalprofils, wodurch die gesamte Optik, sowie die Rastfunktion des Deckelsegmentes negativ beeinflußt werden.

Bei der Montage in Ecken müssen die einzelnen Segmente dieser flachen Kunststoffbänder vor der Fixierung aufgerichtet werden, mindestens jedoch das der Ecke zugewandte Segment. Dieser zeitintensive Vorgang behindert die Montage erheblich.

Bei der Befestigung im geschlossenen Zustand, d.h. die Seitenwände des Kunststoffbandes werden vor der Montage aufgerichtet, ergibt sich neben diesem zeitaufwendigen Aufrichtvorgang der Nachteil, daß das geschlossene Kabelkanalprofil nur sehr schwer mit Schrauben, Dübeln oder Nageln zu befestigen ist, da die Seitenwände den Zugang bei der Fixierung behindern.

Darüber hinaus sind aus dem Stand der Technik Kabelkanäle bekannt, die als starre, U-förmige Kabelkanalprofile hergestellt und montiert werden. Diese Kabelkanalprofile haben, bedingt durch die U-förmige Bauform, den Nachteil, daß das Verpackungsvolumen hoch ist, wodurch Verpackungs-, Lager- und Transportkosten negativ beeinflußt werden.

Unabhängig davon, wo diese Kabelkanalprofile montiert werden, besitzen sie den Nachteil, daß der Zugang zu den Befestigungspunkten durch die Seitenwand behindert ist, wodurch die Montagezeit erhöht wird.

Seitliche Aussparungen müssen durch Abmessen, Einsägen und Herausbrechen des zu entfernenden Teiles sehr zeitintensiv erstellt werden. Dieser Vorgang ist im montierten Zustand der Kabelkanäle nahezu unmöglich.

Desweiteren ist aus der DE 295 02 856 U ein Kunststoffprofil zur Aufnahme von Leitungen bekannt, welches ein starres, winkelförmiges Grundsegment umfasst, mit dem mindestens ein weiteres Kunststoffprofil verbunden ist. Dieses weitere Kunststoffprofil ist im wesentlichen eben und bildet mit dem Grundsegment durch Verschwenken ein geschlossenes Vieleck, wobei nach dem Verschwenken um etwa 90° das weitere Kunststoffprofil in seiner verschwenkten Stellung durch Verrasten an seinem mit dem winkelförmigen Grundsegment verbundenen Rand feststellbar ist.

Das Dokument US-A-4 534 147 offenbart einen Kabelkanal zur Verwendung bei Montage in Ecken, bei dem an ein winkelförmiges Grundsegment ein Deckel einstückig angebunden ist; hierbei ist im Außenwinkelbereich das Grundsegment abgeschrägt.

Der Erfindung lag deshalb das Problem zugrunde, ausgehend von dem genannten Stand der Technik, ein Kunstoffprofil zu entwickeln, welches sich durch geringes Verpackungs-, Lagerund Transportvolumen auszeichnet, bei der Montage eine hohe Stabilität aufweist, Wandunebenheiten problemlos ausgleicht, bei der Fixierung einen freien Zugang zu den Befestigungspunkten ermöglicht, sowie ein Grundelement besitzt, welches vor der Eckenmontage nicht aufgerichtet bzw. eingerastet werden muß und bei dem seitliche Aussparungen zeitsparend auch im montierten Zustand erstellt werden können.

Zudem soll das erfindungsgemäße Kunstoffprofil im montierten Zustand nachträglich das Erstellen von Aussparungen ermöglichen, ohne negative Auswirkungen auf die Stabilität desselben.

Das Problem wird durch ein Kunststoffprofil gelöst, das die Merkmale des Kennzeichens des Anspruchs 1 aufweist.

Bevorzugte Ausgestaltungsformen des Kabelkanalprofils sind durch die Merkmale der auf Anspruch 1 rückbezogenen Unteransprüche angegeben.

Das der Erfindung zugrundeliegende Kunststoffprofil verleiht dem Kabelkanal gerade auch im geöffneten Zustand eine hohe Biegesteifigkeit, wodurch es möglich ist Wandunebenheiten auszugleichen, ohne daß sich der Kabelkanal den unebenen Untergründen anpaßt. Dadurch ist gewährleistet, daß die Optik, sowie die Rastfunktionen des Deckelsegmentes oder der Seitensegmente einwandfrei ist, ohne daß vor der Fixierung ein oder mehrere Segmente aufgerichtet werden müssen. Dies spart erheblich Montagezeit ein.

Gleichzeitig läßt sich das erfindungsgemäße Kunststoffprofil einfach im geöffneten Zustand mit Nägeln, Schrauben oder Dübeln befestigen, weil der Zugang zu den Befestigungspunkten nicht durch eine Seitenwand behindert wird. Durch die elastische und leicht abtrennbare Verbindung zwischen den einzelnen Segmenten ist es möglich, auch im montierten Zustand seitliche Aussparungen zu erstellen. Dabei werden die Seitenwände eingesägt oder eingeschnitten und die elastische Anbindung durchtrennt oder abgerissen. Das erfindungsgemäße Kunststoffprofil zeichnet sich auch dadurch aus, daß sich beim Übereinanderstapeln der einzelnen Kunststoffprofile eine hohe Verpackungsdichte ergibt. Dadurch reduzieren sich im Vergleich zu U-förmigen Kabelkanalprofilen deutlich die Verpackungs-, Lager- und Transportkosten. Das erfindungsgemäße Kunststoffprofil eignet sich neben der Kabel- und Leitungsverlegung auch für die Verlegung von Rohrleitungen sowie für die nachträgliche Verkleidung von Rohren und Leitungen.

Die Erfindung wird nachstehend näher anhand der in den Figuren schematisch dargestellten Ausführungsbeispielen gemäß Figuren 1, 2, 3a, 3b, 4, 5, 6 und 10 bzw. Beispielen, die das Verständnis der Erfindung erleichtern, gemäß den Figuren 7, 8a, 8b, 9 und 11, erläutert. Es zeigen:
- Figur 1: Kunststoffprofil, als starres, winkelförmiges Grundsegment mit weiteren elastisch angebundenen Segmenten, in perspektivischer Ansicht.
- Figur 2: Offenes Kabelkanalprofil, als starres, winkelförmiges Grundsegment und einem weiteren, aufgerichteten, elastisch angebundenen Segment, in perspektivischer Ansicht.
- Figur 3a: Geschlossenes Kabelkanalprofil, als starres, winkelförmiges Grundsegment und einem weiteren, elastisch angebundenen Segment, in perspektivischer Ansicht.
- Figur 3b: Geschlossenes Kabelkanalprofil gemäß Figur 3a als Vieleck ausgebildet, in perspektivischer Ansicht.
- Figur 4: Starres, winkelförmiges Grundsegment, im Innenwinkelbereich verstärkt, in perspektivischer Ansicht.
- Figur 5: Starres, winkelförmiges Grundsegment, im Außenwinkelbereich abgeschrägt, in perspektivischer Ansicht.
- Figur 6: Kunststoffprofil, als starres, winkelförmiges Grundsegment und einem weiteren elastisch angebundenen, starren, winkelförmigen Segment, in perspektivischer Ansicht.
- Figur 7: Starres, winkelförmiges Grundsegment mit Aufnahme und Kammertrennwand, in perspektivischer Ansicht.
- Figur 8a: Starres, winkelförmiges Grundsegment mit elastisch angebundener Kammertrennwand, in perspektivischer Ansicht.
- Figur 8b: Starres, winkelförmiges Grundsegment gemäß Figur 8a mit starr angebundener Kammertrennwand, in perspektivischer Ansicht.
- Figur 9: Starres, winkelförmiges Grundsegment mit Aufnahme und mit an die Kammertrennwand elastisch angebundenen Segmenten, in perspektivischer Ansicht.
- Figur 10: Starres, winkelförmiges Grundsegment mit Schlitzen, in perspektivischer Ansicht.
- Figur 11: Starres, winkelförmiges Grundsegment aus zwei Teilsegmenten mit einem leicht abtrennbaren und die beiden Teilsegmente verbindenden Verbindungssteg, in perspektivischer Ansicht.

In den Figuren sind gleiche Teile mit gleichen Bezugszeichen versehen.

### Bezugszeichenliste:

- 1: starres, winkelförmiges Grundsegment
- 2: Kunststoffsegment
- 3: Verstärkung
- 4: elastische Anbindung
- 5: Abschrägung
- 6: Kammertrennwand
- 7: Aufnahme
- 8: Schlitze
- 9: Verbindungssteg

Alle dargestellten Figuren beschreiben unterschiedliche Ausführungsvarianten eines starren, winkelförmigen Grundsegmentes 1. Das der Erfindung zugrundeliegende Kunststoffprofil wird als Endlosprofil hergestellt und je nach Bedarf abgelängt. Nicht dargestellt sind zusätzliche Fixierungsmöglichkeiten, wie Klebebänder, Lochungen und Verrastungselemente. Diese Verrastungselemente halten das Grundsegment 1 und weitere elastisch angebundene Kunststoffsegmente (2, 2') nach dem Aufrichtvorgang in einer definierten Position.

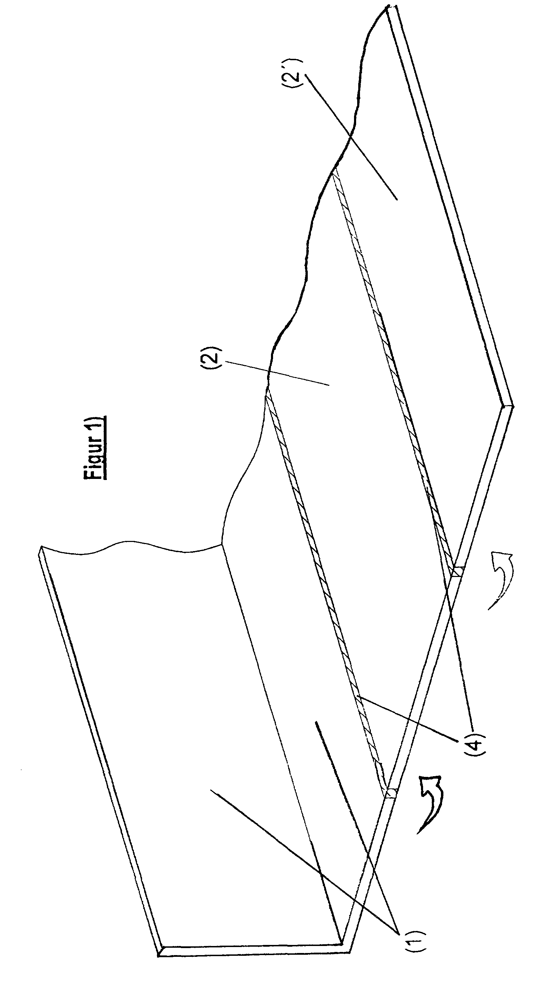

In Figur 1 bezeichnet 1 ein starres, winkelförmiges, aus Kunststoff bestehendes Grundsegment. Mit 2 sind weitere Kunststoffsegmente bezeichnet, die an das mit 1 bezeichnete Grundsegment elastisch angebunden sind. Mit 4 ist die elastische Anbindung beschrieben. Diese Anbindung 4 kann beispielsweise mittels eines Scharniersteges aus weichem Kunststoff, einer lösbaren Scharnierverbindung oder auch durch Reduzierung der Wandstärke zwischen den einzelnen Segmenten erzeugt werden. Mehrere Teilstücke des in Figur 1 dargestellten Kunststoffprofils lassen sich platzsparend aufeinander stapeln und somit Verpackungs-, Lager- und Transportvolumen senken und somit Kosten einsparen.

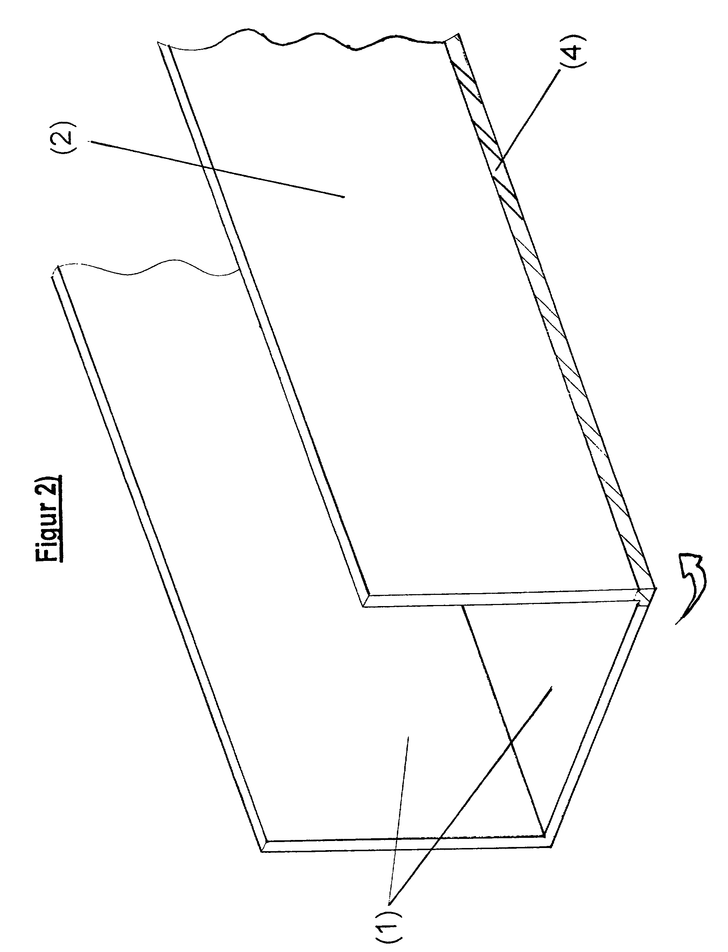

Die Figur 2 zeigt ein offenes Kabelkanalprofil, welches durch Aufrichten und Verrasten eines der mit 2 bezeichneten, elastisch angebundenen Segmente entsteht. Dieses offene Kabelkanalprofil kann durch ein separates Deckelsegment verschlossen werden.

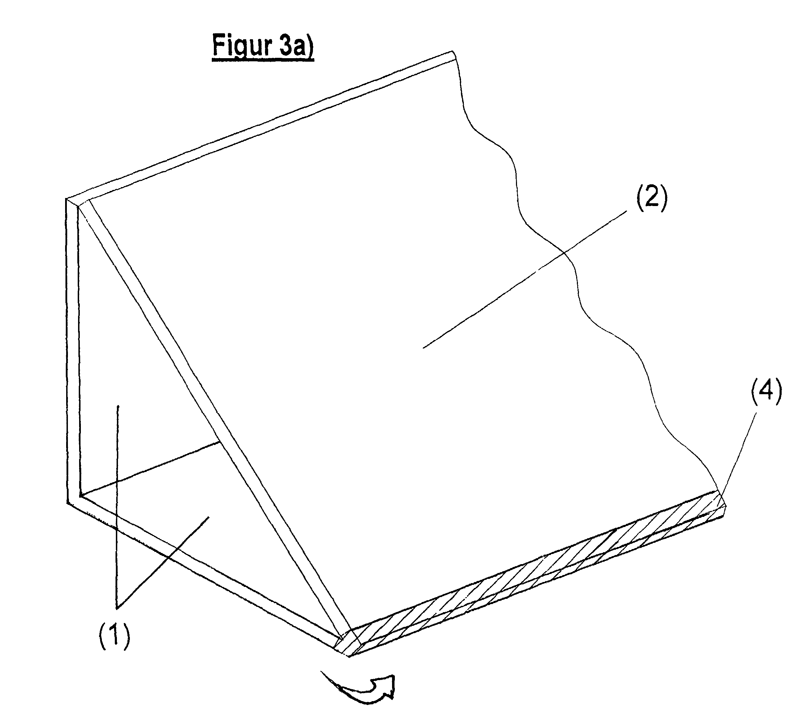

In Figur 3a wird ein geschlossenes Kabelkanalprofil dargestellt. Durch Aufrichten und/oder Verrasten des elastisch angebundenen Segmentes 2 wird ein geschlossener, dreieckiger Kabelkanal gebildet. Diese Kabelkanalvariante eignet sich hervorragend für die Eckenmontage.

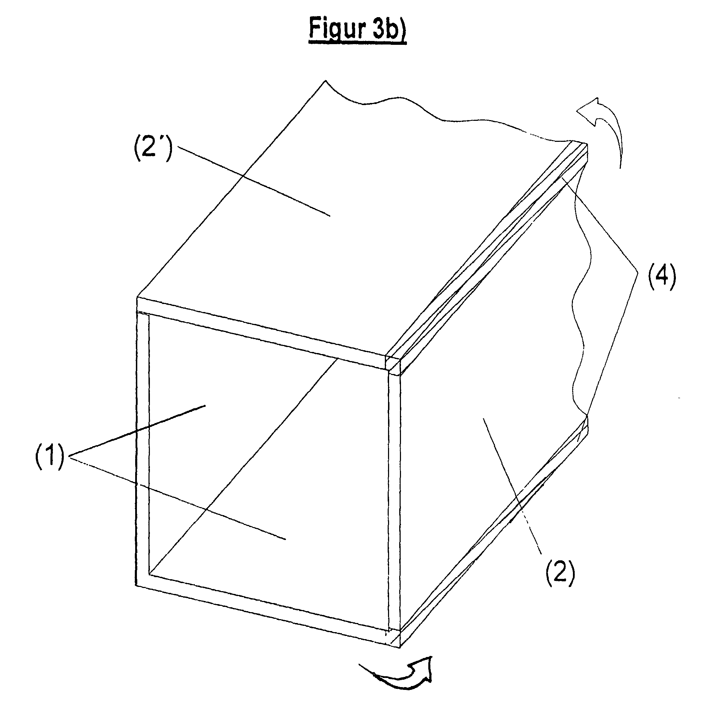

In Figur 3b ist analog Figur 3a ein geschlossenes Kabelkanalprofil dargestellt. Durch Aufrichten und/oder Verrasten mehrerer elastisch angebundener Segmente 2, 2' wird ein geschlossenes Vieleckprofil gebildet.

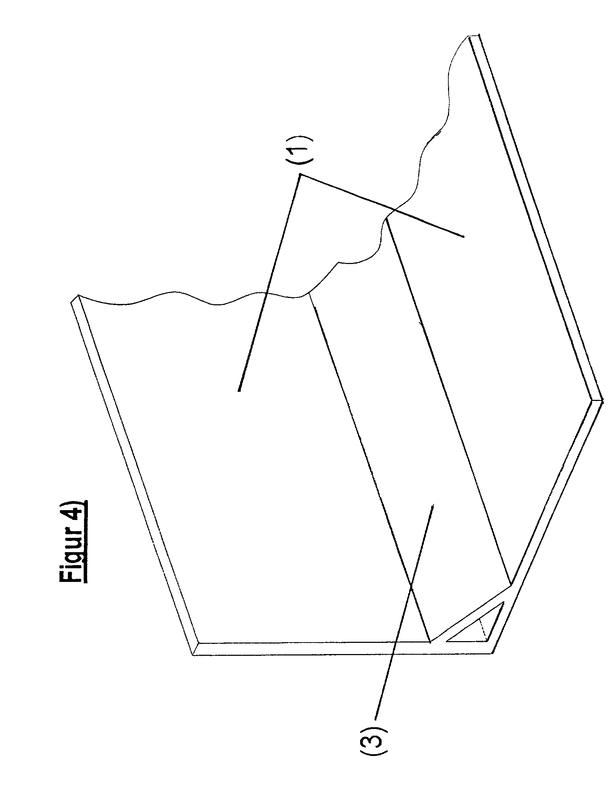

In Figur 4 bezeichnet 3 eine zusätzliche Verstärkung, welche das starre, winkelförmige Grundsegment 1 zusätzlich im Innenwinkelbereich verstärkt. Diese Verstärkung 3 verleiht dem Grundsegment 1 eine erhöhte Biegesteifigkeit.

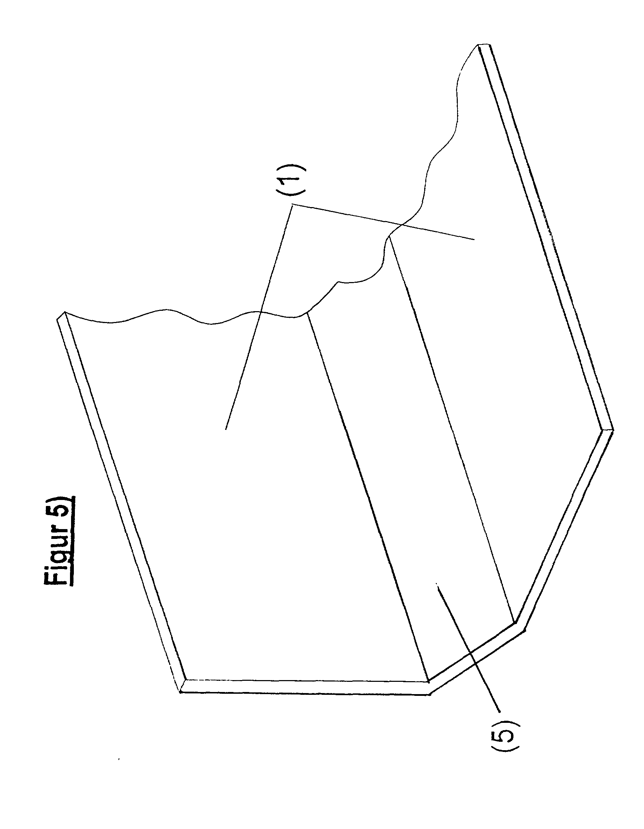

In Figur 5 bezeichnet 5 eine Abschrägung. Dabei ist das starre, winkelförmige Grundsegment 1 im Außenwinkelbereich abgeschrägt oder abgerundet, wodurch unsauberes Mauerwerk oder Winkelabweichungen bei der Eckenmontage ausgeglichen werden.

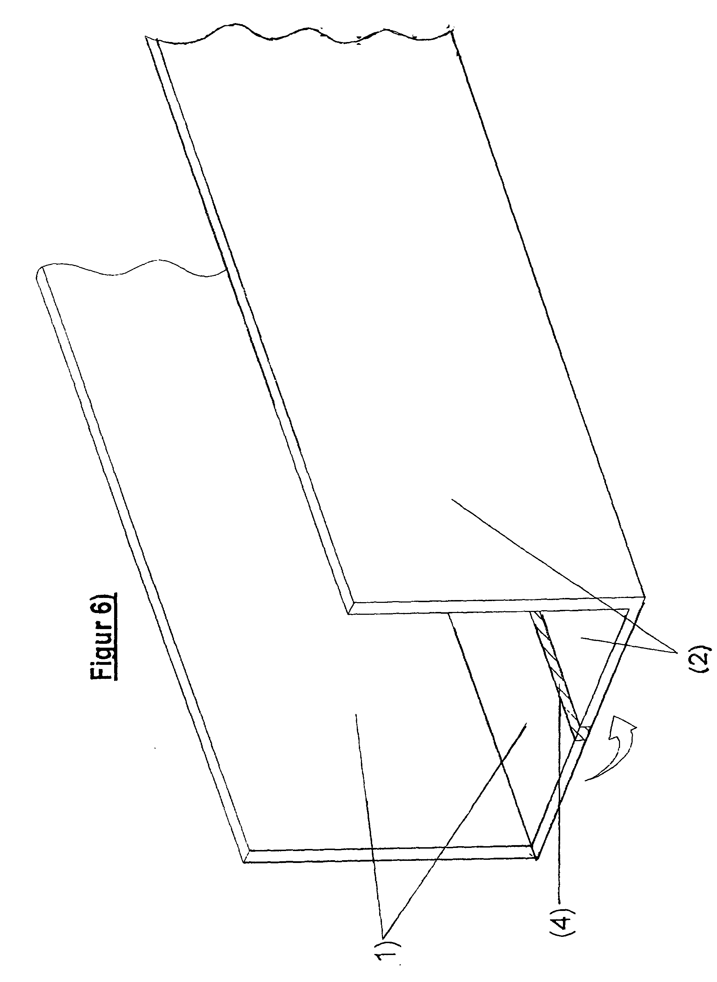

In Figur 6 ist an das starre, winkelförmige Grundsegment 1 ein weiteres starres, winkelförmiges Segment 2 angebunden. Auf diese Weise kann durch einen einzigen Aufricht- und Verrastvorgang ein geschlossenes Kabelkanalprofil gebildet werden.

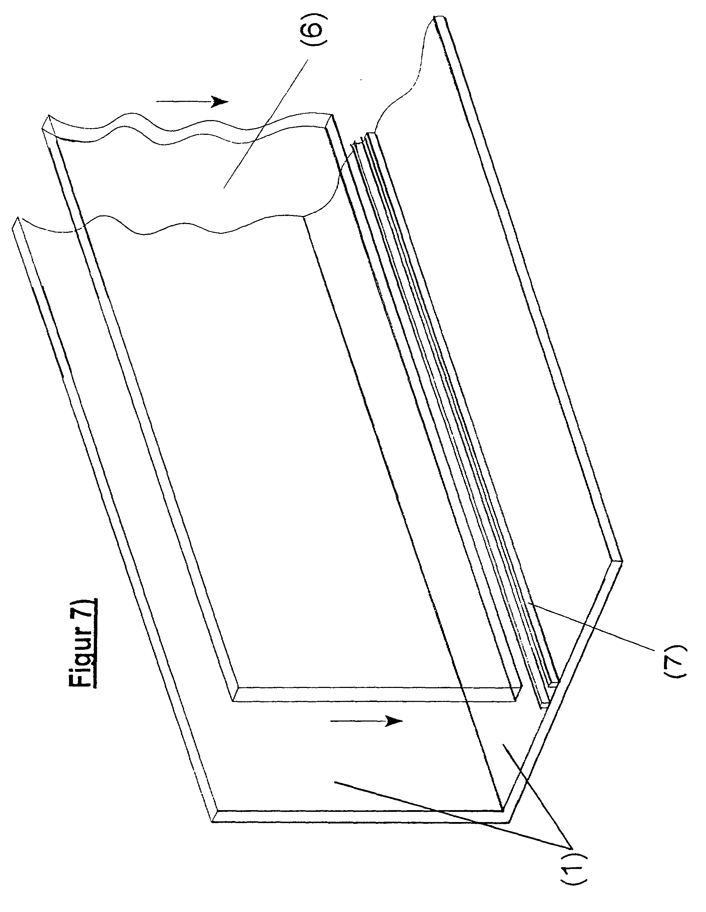

In Figur 7 bezeichnet 7 eine Aufnahme, mit Hilfe derer eine separate Kammertrennwand 6 im Grundsegment 1 fixiert werden kann. Diese Kammertrennwand ermöglicht die Trennung von Starkund Schwachstrom wie auch die Trennung von Elektroleitungen von Heizungsrohren.

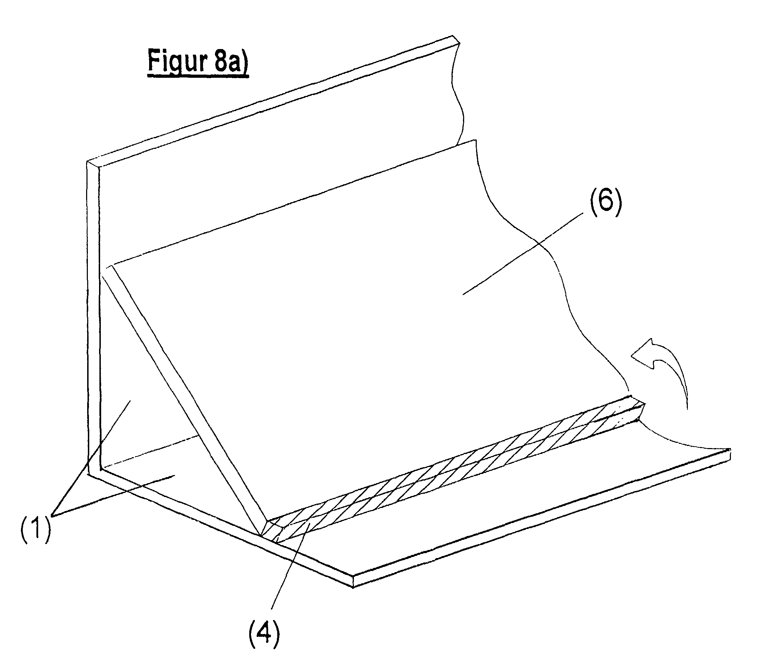

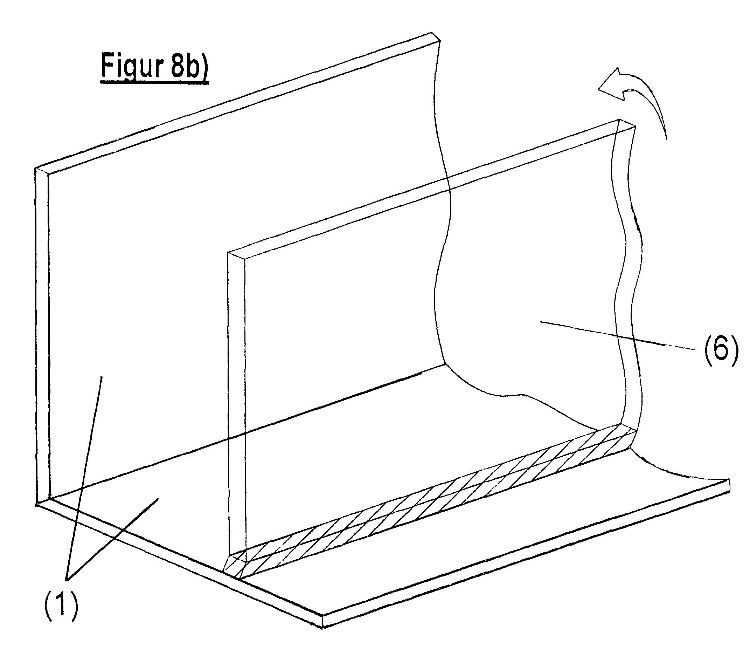

In Figur 8a ist eine Kammertrennwand 6 dargestellt, die elastisch an das Grundsegment angebunden ist. Bei geeigneter Dimensionierung läßt sich die Kammertrennwand 6 an das Grundsegment flach anlegen und beeinträchtigt somit nicht die ausgezeichnete Stapelfähigkeit des Winkelprofils.

In Figur 8b ist eine Kammertrennwand 6 starr mit dem Grundsegment verbunden.

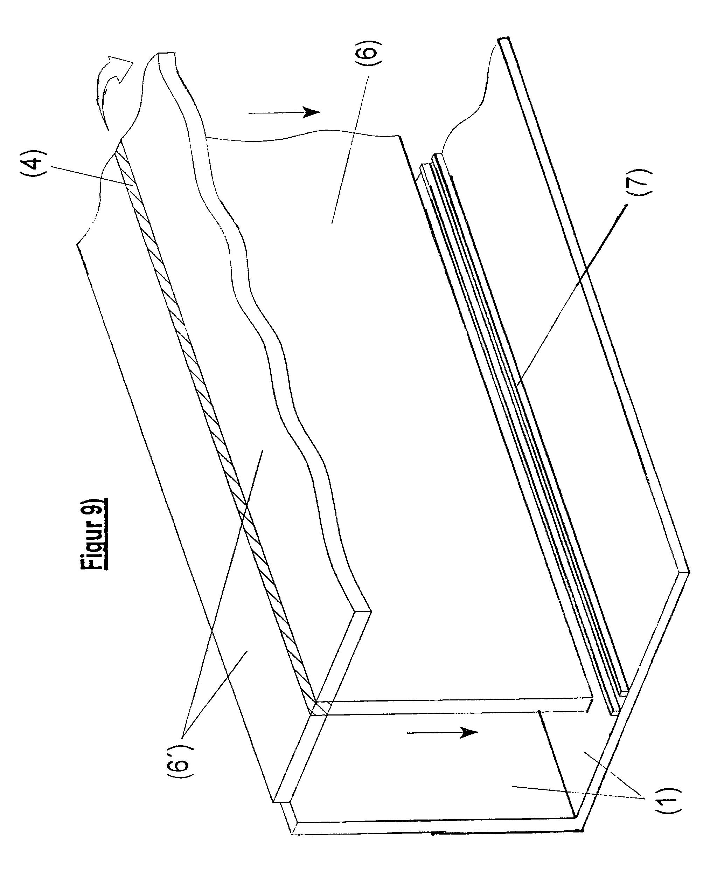

In Figur 9 bezeichnet 6 eine Kammertrennwand, an die ein- oder mehrseitig weitere Kunststoffsegmente 6' elastisch angebunden sind. Auf diese Weise übernimmt die Kammertrennwand 6 mit den elastisch angebundenen Kunststoffsegmenten 6' die Funktion eines separaten Deckels.

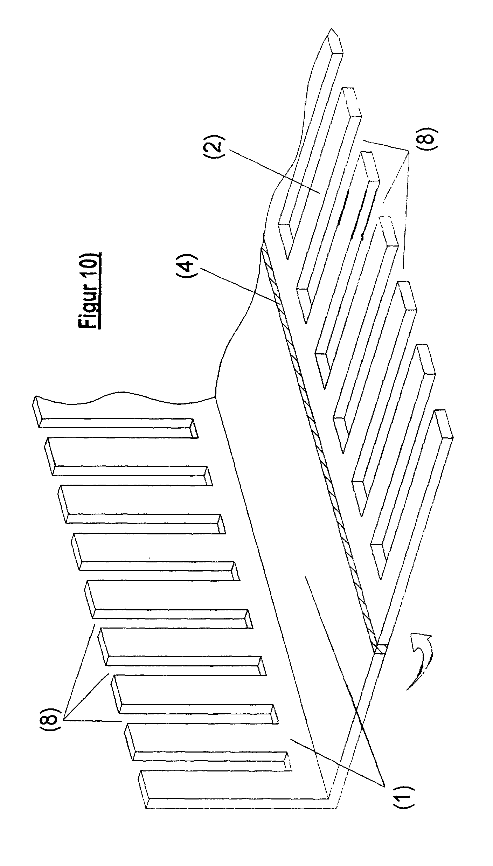

In Figur 10 bezeichnet 8 Schlitze, welche für die seitliche Ausführung von Einzeladern notwendig sind. Diese Schlitze 8 können entweder im starren, winkelförmigen Grundsegment 1 oder in einem oder mehreren elastisch angebundenen Segmenten 2, 2' angebracht sein.

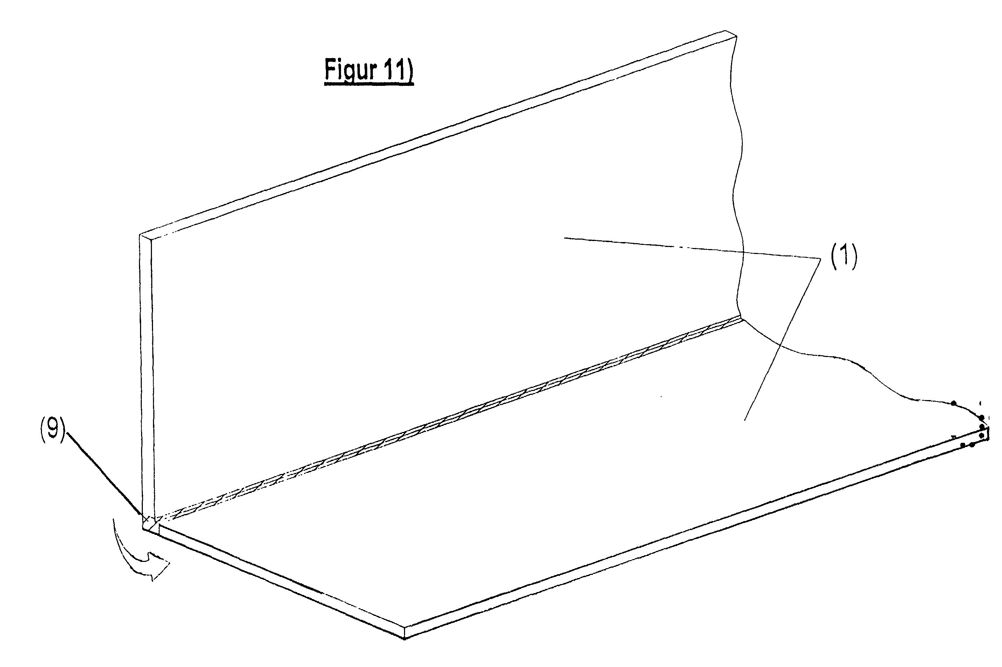

In Figur 11 bezeichnet 9 einen Verbindungssteg, welcher die beiden Teilsegmente des starren, winkelförmigen Grundsegmentes 1 verbindet. Dieser Verbindungssteg 9 hat die Funktion, daß auch im montierten Zustand des Kabelkanals nachträglich Aussparungen erstellt werden können. Dabei ist das Material des Verbindungssteges 9 so gewählt, daß es leicht durchtrennt werden kann, ohne daß dabei die Stabilität des starren, winkelförmigen Grundsegmentes 1 negativ beeinflußt wird.

## Patentansprüche

1. Kunststoffprofil, insbesondere zur Aufnahme von Leitungen, bestehend aus einem starren, winkelförmigen Grundsegment (1), mit dem mindestens ein weiteres Kunststoffsegment (2, 2') elastisch derart verbunden ist, daß durch Verschwenken des oder der weiteren Kunststoffsegmente (2, 2') ein offenes oder geschlossenes Vieleck gebildet wird, wobei das weitere bzw. die weiteren Kunststoffsegmente (2, 2') eben sind und wobei nach dem Verschwenken des oder der weiteren Kunststoffsegmente (2, 2') um je etwa 90° diese in ihrer verschwenkten Stellung durch Verrasten feststellbar sind, **dadurch gekennzeichnet, daß** die beiden das starre, winkelförmige Grundsegment (1) bildenden Teilsegmente durch einen starren Verbindungssteg (9), der aus einem leicht abtrennbaren Material besteht, verbunden sind.

2. Kunststoffprofil nach Anspruch 1, **dadurch gekennzeichnet, daß** das starre, winkelförmige Grundsegment (1) im wesentlichen rechtwinklig ist.

3. Kunststoffprofil nach Anspruch 1 oder 2, **dadurch gekennzeichnet, daß** das starre, winkelförmige Grundsegment (1 ) zusätzlich im Innenwinkelbereich durch eine Verstärkung (3) versteift ist.

4. Kunststoffprofil nach Anspruch 1, 2 oder 3, **dadurch gekennzeichnet, daß** das starre, winkelförmige Grundsegment (1) im Außenwinkelbereich durch eine Abschrägung (5) abgeschrägt oder abgerundet ist.

5. Kunststoffprofil nach einem der vorhergehenden Ansprüche, **dadurch gekennzeichnet, daß** ein oder mehrere elastisch (4) angebundene Segmente (2, 2') Winkelprofile sind.

6. Kunststoffprofil nach einem der vorhergehenden Ansprüche, **dadurch gekennzeichnet, daß** das starre, winkelförmige Grundsegment (1) oder eines der elastisch (4) angebundenen Segmente (2, 2') Verrastungselemente für die Aufnahme von Kammertrennwänden (6) aufweist.

7. Kunststoffprofil nach einem der vorhergehenden Ansprüche, **dadurch gekennzeichnet, daß** an das starre, winkelförmige Grundsegment (1) oder an eines der elastisch (4) angebundenen Segmente (2, 2') eine Kammertrennwand (6) elastisch (4) oder starr angebunden ist .

8. Kunststoffprofil nach Anspruch 7, **dadurch gekennzeichnet, daß** an die Kammertrennwand (6) ein oder mehrere Segmente (6') elastisch (4) angebunden sind.

9. Kunststoffprofil nach einem der vorhergehenden Ansprüche, **dadurch gekennzeichnet, daß** das starre, winkelförmige Grundsegment (1 ) und/oder weitere elastisch (4) angebundene Segmente (2, 2') mit Schlitzen (8) versehen sind .

## Claims

1. A plastic profile, especially for receiving lines, consisting of a rigid, angular basic segment (1) with which at least one further plastic segment (2, 2') is connected in an elastic fashion in such a way that by swiveling the further plastic segment(s) (2, 2') an open or closed polygon is formed, with the further plastic segment(s) (2, 2') being plane and after the swiveling of the further plastic segment(s) (2, 2') by approx. 90° each the same can be latched in their swiveled position by latching, **characterized in that** the two partiel segments forming the rigid, angular basic segment (1) are connected by a connecting bridge (9) which consists of a material that can be severed easily.

2. A plastic profile as claimed in claim 1, **characterized in that** the rigid, angular basic segment (1) is substantially rectangular.

3. A plastic profile as claimed in claim 1 or 2, **characterized in that** the rigid, angular basic segment (1) is additionally stiffened in the internal angle region by a reinforcement (3).

4. A plastic profile as claimed in claim 1, 2 or 3, **characterized in that** the rigid, angular basic segment (1) is beveled or rounded off by a beveling (5).

5. A plastic profile as claimed in one of the preceding claims, **characterized in that** one or several elastically (4) bound segments (2, 2') are angle sections.

6. A plastic profile as claimed in one of the preceding claims, **characterized in that** the rigid, angular basic segment (1) or one of the elastically (4) bound segments (2, 2') are latching elements for receiving chamber separating walls (6).

7. A plastic profile as claimed in one of the preceding claims, **characterized in that** a chamber separating wall (6) is bound elastically (4) or rigidly to the rigid, angular basic segment (1) or to one of the elastically (4) bound segments (2, 2').

8. A plastic profile as claimed in claim 7, **characterized in that** one or several segments (6') are elastically (4) bound to the chamber separating wall (6).

9. A plastic profile as claimed in one of the preceding claims, **characterized in that** the rigid, angular basic segment (1) and/or the further elastically (4) bound segments (2, 2') are provided with slots (8).

## Revendications

1. Profilé en matière plastique, notamment destiné à y loger des conduites et consistant en un segment de base (1) angulaire rigide auquel est relié, par l'intermédiaire d'une liaison élastique, au moins un segment en matière plastique (2, 2') supplémentaire de manière à former, en faisant pivoter le ou les segments en matière plastique supplémentaires (2, 2'), un polygone ouvert ou fermé, le ou les segments en matière plastique supplémentaires (2, 2') étant plans et le ou les segments en matière plastique supplémentaires (2, 2') pouvant être fixés par enclenchement dans leur position pivotée après avoir été pivotés chacun d'environ 90°, **caractérisé en ce que** les deux segments partiels formant le segment de base (1) angulaire rigide sont reliés par l'intermédiaire d'une entretoise de liaison (9) rigide réalisée en un matériau facilement détachable.

2. Profilé en matière plastique selon la revendication 1, **caractérisé en ce que** le segment de base (1) angulaire rigide forme sensiblement un angle droit.

3. Profilé en matière plastique selon la revendication 1 ou 2, **caractérisé en ce que** le segment de base (1) angulaire rigide est de plus rigidifié par un renfort (3) dans la zone de son angle intérieur.

4. Profilé en matière plastique selon la revendication 1, 2 ou 3, **caractérisé en ce que** le segment de base (1) angulaire rigide est taillé en biseau (5) ou arrondi dans la zone de son angle extérieur.

5. Profilé en matière plastique selon l'une quelconque des revendications précédentes, **caractérisé en ce qu'**un ou plusieurs segments (2, 2') reliés par l'intermédiaire d'une liaison élastique (4) sont des cornières.

6. Profilé en matière plastique selon l'une quelconque des revendications précédentes, **caractérisé en ce que** le segment de base (1) angulaire rigide ou l'un des segments (2, 2') reliés par l'intermédiaire d'une liaison élastique (4) comporte des éléments d'enclenchement pour recevoir des parois de chambre (6).

7. Profilé en matière plastique selon l'une quelconque des revendications précédentes, **caractérisé en ce qu'**une paroi de chambre (6) est reliée, par l'intermédiaire d'une liaison élastique (4) ou rigide, au segment de base (1) angulaire rigide ou à l'un des segments (2, 2') reliés par l'intermédiaire d'une liaison élastique (4).

8. Profilé en matière plastique selon la revendication 7, **caractérisé en ce qu'**un ou plusieurs segments (6') sont reliés à la paroi de chambre (6) par l'intermédiaire d'une liaison élastique (4).

9. Profilé en matière plastique selon l'une quelconque des revendications précédentes, **caractérisé en ce que** le segment de base (1) angulaire rigide et/ou des segments (2, 2') supplémentaires reliés par l'intermédiaire d'une liaison élastique (4) sont pourvus de fentes (8).
